# EUROPÄISCHE PATENTSCHRIFT

(11) **EP 0 552 453 B1**
(45) Veröffentlichungstag und Bekanntmachung des Hinweises auf die Patenterteilung: **08.03.1995**
(21) Anmeldenummer: 92120902.9
(22) Anmeldetag: 08.12.1992
(51) Int. Cl.: G05D 23/13

(54) **Stellvorrichtung für ein Mischventil**
Actuating device for a mixing valve
Dispositif de commande pour une soupape de mélange

(30) Priorität: 18.12.1991 DE 4141791
(43) Veröffentlichungstag der Anmeldung: 28.07.1993
(73) Patentinhaber: FRIEDRICH GROHE AKTIENGESELLSCHAFT, D-58675 Hemer (DE)
(72) Erfinder: Frankholz, Christian, W-5840 Schwerte (DE)

(56) Entgegenhaltungen:
- EP-A- 0 461 536
- DE-A- 3 530 812
- GB-A- 2 172 382
- US-A- 3 685 728

## Beschreibung

Die Erfindung betrifft eine Sollwerteinstellvorrichtung an einem thermostatisch geregeltem Mischventil für Kalt- und Warmwasser mit einer auf einem feststehenden Kopfstück mittels Gewinde schraubbaren Stellmutter, auf der eine Griffhaube drehfest gehaltert ist, die mit einem feststehenden Anschlagring und einer Skalenanordnung zusammenwirkt, wobei ein von Hand lösbarer Anschlag als Drehbegrenzung, die als erste Temperaturbegrenzung dient, vorgesehen ist.
Eine Vorrichtung dieser Art ist aus der Druckschrift DE 35 30 812 A1 bekannt. Bei dieser Einrichtung ist lediglich eine vom Benutzer lösbare Begrenzung zur Einstellung der Heißwassertemperatur vorgesehen. In einzelnen Staaten wird es jedoch gefordert, daß die einstellbare Heißwassertemperatur unbeeinflußbar vom Benutzer auf einen bestimmten Wert begrenzt ist.

Der Erfindung liegt die Aufgabe zugrunde, die im Oberbegriff des Anspruchs 1 angegebene Vorrichtung zu verbessern und so auszubilden, daß die einstellbare Heißwassertemperatur mit einer Einrichtung auf den jeweils geforderten Maximalwert begrenzt werden kann.

Diese Aufgabe wird erfindungsgemäß dadurch gelöst, daß eine zusätzliche, dem Benutzer nicht unmittelbar zugängliche, einstellbare maximale Temperaturbegrenzung vorgesehen ist, bei der der Anschlagring einen vorstehenden erweiterten Bereich aufweist, in den die drehbare Griffhaube mit einem zylindrischen Ansatz einfaßt, wobei der Ansatz mit der Stellmutter drehfest in Eingriff steht, und daß in einem Ringraum zwischen dem Ansatz und der Innenwandung des erweiterten Bereichs ein Stellring vorgesehen ist, der mittels Riefenverzahnung drehfest mit dem Anschlagring kuppelbar ist, wobei an der Innenwandung des Stellrings eine Anschlagnase ausgebildet ist, die mit einem auf der Außenwandung des Ansatzes ausgebildeten Heißwassertemperaturbegrenzungsanschlag zusammenwirkt.
Weitere Ausgestaltungen der Erfindung sind in den Ansprüchen 2 bis 7 angegeben.

Die mit der Erfindung erzielbaren Vorteile bestehen insbesondere darin, daß mit einfachen, wenig Platz benötigenden Mitteln eine einstellbare, vom Benutzer nicht unmittelbar beeinflußbare Begrenzung der Heißwassertemperatureinstellung ermöglicht wird. Der Stellmechanismus für die Heißwassertemperaturbegrenzung ist von außen nicht unmittelbar zugänglich, also kindersicher. Durch die Anordnung der Riefenverzahnung, mit der der Stellring drehfest mit dem Anschlagring kuppelbar ist, ist eine feinstufige Einstellung der Heißwassertemperaturbegrenzung ermöglicht.

Ein Ausführungsbeispiel der Erfindung ist in der Zeichnung dargestellt und wird im folgenden näher beschrieben. Es zeigt
- Figur 1: eine Sollwerteinstellvorrichtung an einem zum Teil dargestellten Mischventil im Längsschnitt;
- Figur 2: die Sollwerteinstellvorrichtung gemäß Figur 1 in der Schnittebene II;
- Figur 3: die Sollwerteinstellvorrichtung gemäß Figur 1 in der Schnittebene III.

Die in der Zeichnung dargestellte Einstellvorrichtung ist an einem, mit einem Teil ihres Gehäuses 1 dargestellten thermostatisch geregelten Mischventils für Kalt- und Warmwasser angeordnet. Die Sollwerteinstellvorrichtung ist dabei mit einem Kopfstück 2 in das Gehäuse 1 gedichtet eingeschraubt. Auf dem vorstehenden Bereich des Kopfstücks 2 ist mit Gewinde 31 eine Stellmutter 3 angeordnet. Die Stellmutter 3 wirkt mit einem zentralen Druckstück 32 auf eine Ventilstange 21 ein, die in bekannter Weise mit einem Dehnstoffelement und einem Doppelsitzventilkörper zur Steuerung der Einlaßquerschnitte von Kalt- und Warmwasser verbunden ist. Durch eine Drehbewegung der Stellmutter 3 kann somit die Position des Doppelsitzventilkörpers zu dem Kaltwasser- und Warmwasserventilsitz gegensinnig verstellt werden, so daß unterschiedlich temperiertes Mischwasser von dem Mischventil erzeugt wird.

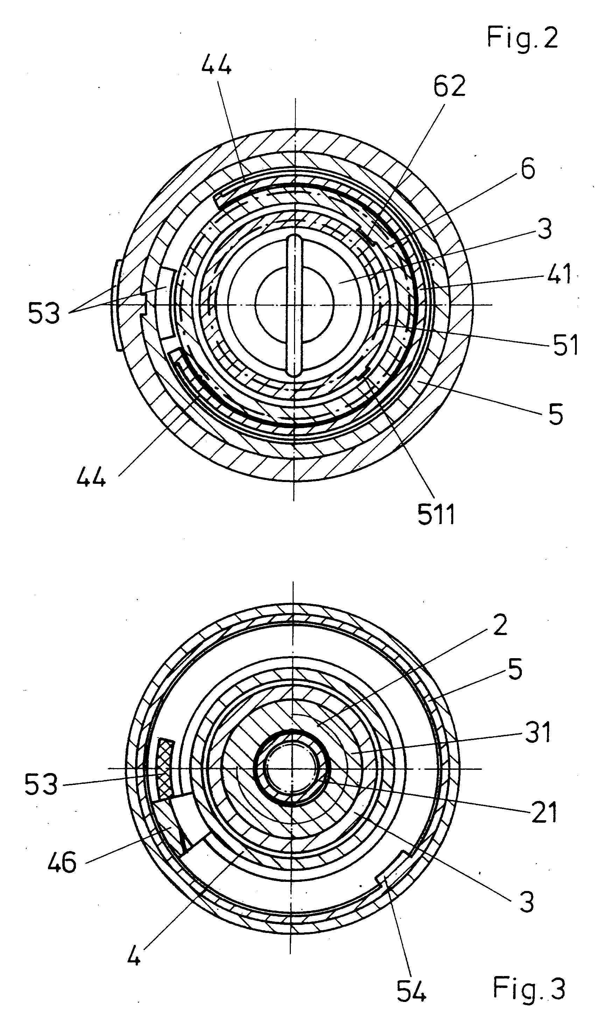

Auf dem Kopfstück 2 ist außerdem drehfest ein Anschlagring 4 angeordnet, der einen vorstehenden erweiterten Bereich 41 aufweist. Auf dem Anschlagring 4 ist eine Griffhaube 5 angeordnet, die einen zentrischen Ansatz 51 aufweist, an dessen Innenwandung eine Riefenverzahnung 33 ausgebildet ist, die mit einer entsprechenden Riefenverzahnung 33 auf dem Außenmantel der Stellmutter 3 in Eingriff steht und somit eine drehfeste Kupplung zwischen der Stellmutter 3 und Griffhaube 5 bewerkstelligt. Die Griffhaube 5 ist dabei mit Radialpaßstücken 8 axial festliegend aber drehbar auf dem Anschlagring gehaltert, so daß bei einem Drehvorgang die Stellmutter 3 axial durch das Gewinde 31 in dem Ansatz 51 bewegbar ist. In einem Ringraum 42 zwischen der Innenwandung des erweiterten Bereichs 41 des Anschlagrings 4 und der Außenwandung des Ansatzes 51 ist ein Stellring 6 angeordnet. Der Stellring 6 ist im vorderen Bereich des Ringraums 42 und einer Riefenverzahnung 61 drehfest mit dem Anschlagring 4 gekuppelt. Der Anschlagring 6 weist dabei, wie es insbesondere aus Figur 2 zu entnehmen ist, eine Anschlagnase 62 auf, die mit einem an der Außenwandung des Ansatzes 51 ausgebildeten Heißwassertemperaturbegrenzungsanschlag 511 zusammenwirkt. Der Anschlagring 6 ist dabei von einer Feder 63, die sich an einer Schulter des Anschlagrings 4 abstützt, in seine Kupplungsstellung gestrammt. In der Kupplungsstellung liegt der Anschlagring 6 an einem Begrenzungsring 45 an, der an der Außenwandung des Anschlagrings 4 in einer Ringnut 44 gehalten ist und mit einem Stirnflansch 450 die Stirnseite des Anschlagrings 4 übergreift.
Damit der Stellring 6 relativ zum Anschlagring 4 verdreht werden kann, ist in dem Ringraum 42 hinter der Riefenverzahnung 61 eine Freidrehung 43 ausgebildet, so daß der Stellring 6 entgegen der Kraft der Feder 63 aus der Riefenverzahnung 61 herausgeschoben und in der herausgeschobenen Stellung gedreht werden kann. Damit der Anschlagring von außen zugänglich ist, sind an der Stirnseite der Griffhaube 5 Öffnungen 52 ausgebildet. Zur Abdeckung der Öffnungen 52 ist eine Kappe 7 mittels Gewinde 71 an der Griffhaube 5 befestigbar.

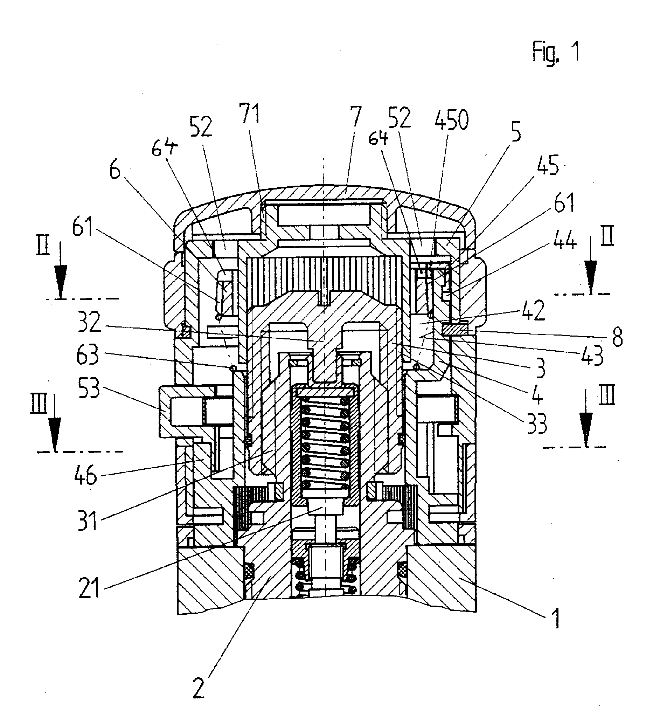

An der Griffhaube 5 ist außerdem ein lösbarer Anschlag 53 vorgesehen, der mit einem Festanschlag 46 des Anschlagrings 4 zusammenwirkt, wie es insbesondere aus Figur 1 und 3 zu entnehmen ist. Außerdem ist ein Kaltwasserbegrenzungsanschlag 54 an der Innenwandung der Griffhaube 5 ausgebildet, der ebenfalls mit dem Festanschlag 46 des Anschlagrings 4 zusammenwirkt.

Die Sollwerteinstellvorrichtung hat folgende Funktionsweise:
Eine auf die Griffhaube 5 aufgebrachte Drehbewegung wird durch die Riefenverzahnung 33 auf die Stellmutter 3 übertragen, die von dem Gewinde 31 entsprechend axial zum Kopfstück 2 bewegt wird, wodurch eine Stellgröße über das Druckstück 32 mit der Ventilstange 21 erzeugt wird.
Wird die Griffhaube 5 von der Kaltwasserstellung in eine Warmwasserstellung bewegt, so gelangt der lösbare Anschlag 53 bei etwa 38°C Mischwassertemperatur an dem Festanschlag 46 zur Anlage, wie es aus Figur 3 zu entnehmen ist. Wird nun vom Benutzer der Anschlag 53 radial einwärtsgedrückt, so kann die Griffhaube 5 weitergedreht werden, so daß eine höhere Mischwassertemperatur einstellbar ist. Bei einer Rückdrehung in eine Kaltwasserstellung wird der lösbare Anschlag 53 über eine Schräge an dem Festanschlag 6 vorbeigeführt.
Die maximal einstellbare Heißwassertemperatur wird von dem Stellring 6 begrenzt. Wie es insbesondere aus Figur 2 zu entnehmen ist, gelangt hierbei der Heißwassertemperaturbegrenzungsanschlag 511 an dem Ansatz 51 der Griffhaube 5 an der Anschlagnase 62 des Stellrings 6 zur Anlage.
Die Anschlagnase 62 mit dem Stellring 6 kann feingestuft durch die Riefenverzahnung 61 in verschiedenen Drehstellungen in dem Anschlagring 4 angeordnet werden. Hierzu wird zunächst die Kappe 7 von der Griffhaube 5 abgeschraubt, so daß nunmehr die Öffnungen 52 zugänglich sind. Mit einem Werkzeug, z.B. Schraubendreher, kann danach der Stellring 6 axial entgegen der Kraft der Feder 63 zurückgeschoben werden, so daß in der Freidrehung 43 nunmehr die Anschlagnase 62 in eine andere Drehposition bewegt werden kann. Vorteilhaft wird hierbei vorher die Griffhaube 5 auf die gewünschte maximale Heißwassertemperatur gedreht, so daß in diesem Falle der Stellring 6 lediglich bis zum Anschlag an den Heißwassertemperaturbegrenzungsanschlag 511 der Griffhaube 5 zu verdrehen ist. Nach dem Entfernen des Werkzeuges drückt die Feder 63 den Stellring 6 wieder zurück in die Riefenverzahnung 61 und stellt die drehfeste Kupplung her. Danach kann die Kappe 7 wieder aufgeschraubt werden und die Sollwerteinstellvorrichtung ist wiederum betriebsbereit mit der gewünschten maximalen Heißwassertemperaturbegrenzung.

Zur leichten Handhabbarkeit der Einstellung des Stellrings 6 kann dieser mit einer oder mehreren Nuten 64 versehen sein, in die beim Einstellvorgang jeweils ein Werkzeug (Schraubendreher) einrastbar ist.
Bei der Begrenzung der Heißwassertemperatur wird die Griffhaube 5 dann zunächst in die äußerste Heißwasserstellung gedreht, wobei die Nuten 64 so angeordnet sind, daß sie sich in dieser Drehstellung hinter den Öffnungen 52 befinden. Die Öffnungen 52 können dabei als Bohrungen ausgebildet sein, durch die der Schraubendreher gerade hindurchführbar ist. In dieser Stellung kann somit der Stellring 6 einfach in die Freidrehung 43 zurückgeschoben werden, worauf dann die Griffhaube 5 zusammen mit dem Stellring 6 in die gewünschte maximale Heißwassertemperaturstellung gedreht werden kann. Sodann kann der Stellring 6 von der Feder 63 in die Riefenverzahnung 61 des Anschlagrings 4,41 zurückgeschoben werden, so daß dann die neu eingestellte Heißwassertemperaturbegrenzung wirksam ist.

## Patentansprüche

1. Sollwerteinstellvorrichtung an einem thermostatisch geregelten Mischventil für Kalt- und Warmwasser mit einer auf einem feststehenden Kopfstück (2) mittels Gewinde (31) schraubbaren Stellmutter (3), auf der eine Griffhaube (5) drehfest gehaltert ist, die mit einem feststehenden Anschlagring (4) und einer Skalenanordnung zusammenwirkt, wobei ein von Hand lösbarer Anschlag (53) als Drehbegrenzung, die als erste Temperaturbegrenzung dient, vorgesehen ist, dadurch gekennzeichnet, daß eine zusätzliche, dem Benutzer nicht unmittelbar zugängliche, einstellbare maximale Temperaturbegrenzung vorgesehen ist, bei der der Anschlagring (4) einen vorstehenden erweiterten Bereich (41) aufweist, in den die drehbare Griffhaube (5) mit einem zylindrischen Ansatz (51) einfaßt, wobei der Ansatz (51) mit der Stellmutter (3) drehfest in Eingriff steht, und daß in einem Ringraum (42) zwischen dem Ansatz (51) und der Innenwandung des erweiterten Bereichs (41) ein Stellring (6) vorgesehen ist, der mittels Riefenverzahnung (61) drehfest mit dem Anschlagring (4) kuppelbar ist, wobei an der Innenwandung des Stellrings (6) eine Anschlagnase (62) ausgebildet ist, die mit einem auf der Außenwandung des Ansatzes (51) ausgebildeten Heißwassertemperaturbegrenzungsanschlag (511) zusammenwirkt.

2. Sollwerteinstellvorrichtung nach Anspruch 1, dadurch gekennzeichnet, daß die Riefenverzahnung (61) im vom Gehäuse (1) abgekehrten Teil des Bereichs (41) ausgebildet und anschließend eine Freidrehung (43) vorgesehen ist, die so dimensioniert ist, daß der Stellring (6) völlig in die Freidrehung (43) eingeschoben werden kann und in dieser Stellung drehbar ist.

3. Sollwerteinstellvorrichtung nach Anspruch 2 dadurch gekennzeichnet, daß der Stellring (6) axial von einer Feder (63) in die Eingriffstellung gestrammt ist.

4. Sollwerteinstellvorrichtung nach einem der Ansprüche 1 bis 3 dadurch gekennzeichnet, daß an der Außenwandung des Anschlagrings (4, 41) in einer Ringnut (44) ein Begrenzungsring (45) eingesetzt ist, der mit einem senkrecht angeordneten Stirnflansch (450) die Stirnseite des Anschlagrings (4, 41) übergreift und eine Anlage für den Stellring (6) in der Kupplungsstellung bildet.

5. Sollwerteinstellvorrichtung nach einem der Ansprüche 1 bis 4 dadurch gekennzeichnet, daß in der Stirnseite der Griffhaube (5) Öffnungen (52) vorgesehen sind, derart, daß mit einem einfachen Werkzeug, beispielsweise einem Schraubendreher, der Stellring (6) aus seiner Eingriffposition ausrück- und verdrehbar ist.

6. Sollwerteinstellvorrichtung nach einem der Ansprüche 1 bis 5 dadurch gekennzeichnet, daß die Griffhaube (5) stirnseitig mit einer Kappe (7) verschlossen ist.

7. Sollwerteinstellvorrichtung nach Anspruch 6 dadurch gekennzeichnet, daß die Kappe (7) mittels Gewinde (71) an der Griffhaube (5) befestigt ist.

## Claims

1. Desired value setting device for a thermostatically controlled mixing valve for cold and hot water, having an adjusting nut (3) that can be screwed on a fixed-position head part (2) by means of a screw thread (31) and on which there is non-rotatably secured a grip cap (5) which co-operates with a fixed-position stop ring (4) and a scale arrangement, a manually releasable stop member (53) being provided as a rotation-limiting means which serves as a first temperature limiting means, characterised in that an additional adjustable maximum temperature limiting means is provided which is not immediately accessible to the user, in which the stop ring (4) has a projecting widened region (41) in which the rotatable grip cap (5) fits with a cylindrical extension (51), the extension (51) being non-rotatably engaged with the adjusting nut (3), and that in an annular space (42) between the extension (51) and the inner wall of the widened region (41) an adjusting ring (6) is provided which is arranged to be coupled non-rotatably to the stop ring (4) by means of grooved toothing (61), there being formed on the inner wall of the adjusting ring (6) a stop lug (62) which co-operates with a hot water temperature limiting stop member (511) formed on the outer wall of the extension (51).

2. Desired value setting device according to claim 1, characterised in that the grooved toothing (61) is formed in the part of the region (41) furthest from the housing (1) and adjacent to it an area of free rotation (43) is provided which is of such dimensions that the adjusting ring (6) can be pushed fully into the area of free rotation (43) and is rotatable in this position.

3. Desired value setting device according to claim 2, characterised in that the adjusting ring (6) is axially held firmly in the engagement position by a spring (63).

4. Desired value setting device according to one of claims 1 to 3, characterised in that on the outer wall of the stop ring (4, 41) in an annular groove (44) there is inserted a limiting ring (45) which engages over the end of the stop ring (4, 41) with a vertically arranged end flange (450) and forms an abutment for the adjusting ring (6) in the coupling position.

5. Desired value setting device according to one of claims 1 to 4, characterised in that in the end of the grip cap (5) openings (52) are provided in such a way that with a simple tool, for example a screwdriver, the adjusting ring (6) can be disengaged from its engagement position and rotated.

6. Desired value setting device according to one of claims 1 to 5, characterised in that the grip cap (5) is closed at the end by a cap (7).

7. Desired value setting device according to claim 6, characterised in that the cap (7) is fastened to the grip cap (5) by means of a screw thread (71).

## Revendications

1. Dispositif de réglage d'une valeur de consigne d'une soupape de mitigeur thermostatique pour l'eau froide et l'eau chaude, comportant un écrou de réglage (3) vissé par un filetage (31) sur une tête fixe (2),et recevant solidairement en rotation un capuchon formant poignée (5) qui coopère avec une bague de butée (4), fixe, et une graduation, une butée (53), qui se libère à la main, servant de moyen de limitation de rotation constituant un premier moyen de limitation de la température, caractérisé par un moyen complémentaire de limitation de la température maximale, réglable, non accessible directement à l'utilisateur, et pour lequel la bague de butée (4) comporte une plage étendue (41) en saillie, dans laquelle vient prendre le capuchon formant poignée (5) avec un épaulement cylindrique (51), l'épaulement (51) étant en prise solidairement en rotation avec l'écrou de réglage (3) et dans un volume annulaire (42) entre l'épaulement (51) et la paroi intérieure de la plage étendue (41), une bague de réglage (6) est couplée solidairement en rotation par une denture moletée (61) à la bague de butée (4), et un bec de butée (62) est réalisé sur la paroi intérieure de la bague de réglage (6), pour coopérer avec une butée de limitation de température d'eau chaude (511) réalisée sur la paroi extérieure de l'épaulement (51).

2. Dispositif de réglage d'une valeur de consigne selon la revendication 1, caractérisé en ce que la denture moletée (61) est réalisée dans une partie de la zone (41) non tournée vers le boîtier (4) et qu'à la suite il y a un dégagement (43) dimensionné pour que la bague de réglage (6) puisse être engagée complètement dans le dééga-gement (43) et tourner dans celle-ci.

3. Dispositif de réglage d'une valeur de consigne selon la revendication 2, caractérisé en ce que la bague de réglage (6) est tendue axialement en position de prise par un ressort (63).

4. Dispositif de réglage d'une valeur de consigne selon l'une des revendications 1 à 3, caractérisé en ce qu'une bague de limitation (45) est logée dans la paroi extérieure de la bague de butée (4, 41) dans une rainure annulaire (44), et cette bague déborde, par une bride frontale (450) perpendiculaire, la face frontale de la bague de butée (4, 41) et forme un appui pour la bague de réglage (6) en position embrayée.

5. Dispositif de réglage d'une valeur de consigne selon l'une des revendications 1 à 4, caractérisé en ce que des ouvertures (52) sont prévues dans la face frontale du capuchon formant poignée (5) de manière qu'avec un outil simple, par exemple un tournevis, on puisse dégager la bague de réglage (6) de sa position de prise et la tourner.

6. Dispositif de réglage d'une valeur de consigne selon l'une des revendications 1 à 5, caractérisé en ce que le capuchon formant poignée (5) est fermé du côté frontal par un couvercle (7).

7. Dispositif de réglage d'une valeur de consigne selon la revendication 6, caractérisé en ce que le couvercle (7) est fixé au capuchon formant poignée par un filetage (71).
